# EUROPEAN PATENT APPLICATION

(11) **EP 4 647 450 A1**
(43) Date of publication of application: **12.11.2025**
(21) Application number: 23914754.9
(22) Date of filing: 13.12.2023
(51) Int. Cl.: C08F 290/06, C08G 18/48, C08G 18/67

(54) **CURABLE RESIN COMPOSITION, FILM, AND ARTICLE**

(30) Priority: 04.01.2023 JP 2023000288
(71) Applicant: DKS Co. Ltd., Kyoto-shi, Kyoto 600-8873 (JP)
(72) Inventor: MURAKAMI Hiroki, kyoto-shi, Kyoto 600-8873 (JP); HAYASAKI Naoya, kyoto-shi, Kyoto 600-8873 (JP); NISHIMURA Takuma, kyoto-shi, Kyoto 600-8873 (JP); HIROSE Masaharu, kyoto-shi, Kyoto 600-8873 (JP)
(74) Representative: Kuhnen & Wacker Patent- und Rechtsanwaltsbüro PartG mbB
(86) International application number: PCT/JP2023/044571
(87) International publication number: WO 2024/147266

(57) **Abstract**

Provided is a curable resin composition that enables the formation of a cured coating excellent in elongation characteristics and excellent in all of the solvent resistance, scratch resistance, and blocking resistance.

The curable resin composition of the present invention comprises a urethane (meth)acrylate (X) and an acrylamide derivative (Y), wherein the urethane (meth)acrylate (X) comprises, at least, a structural unit derived from an isocyanate, a structural unit derived from a polyether polyol that is trifunctional and that has a number average molecular weight of 1200 or lower, and a structural unit derived from a (meth)acrylic ester having at least one hydroxy group, the acrylamide derivative (Y) is a compound that has a molecular weight of 300 or lower and that contains at least one oxygen atom in addition to an oxygen atom in an acryloyl group, and the mass ratio X/Y between the urethane (meth)acrylate (X) and the acrylamide derivative (Y) is 1/10 to 7.5/10.

## Description

### Technical Field

The present invention relates to a curable resin composition, a film, and an article.

### Background Art

A curable composition containing a polyurethane resin enables the formation of a cured coating by, for example, being cured with light irradiation or the like. Such a cured coating can be formed, for example, on a PET film or the like, and can improve physical properties of the film. In particular, a cured coating formed from a curable composition containing a polyurethane resin is excellent in mechanical properties, solvent resistance, water resistance, and the like because of the polyurethane resin contained, and can be used in a wide range of fields.

Patent Document 1 discloses an energy ray-curable resin composition containing a urethane (meth)acrylate obtained by reacting a polycaprolactone-based polyol, a polyether polyol, a polyisocyanate, and a (meth)acrylate monomer having one or more hydroxy group. Such a curable resin composition enables the formation of a material (film or the like) in which the resin has been cured and exhibits excellent mechanical properties such as crack resistance and stretchability at high temperature.

### Citation List

### Patent Literature

PTL 1: Japanese Unexamined Patent Application Publication No. 2014-189651

### Summary of Invention

### Technical Problem

Recently, in the fields of, for example, various films, there has been a strong need for a film material that is good in all of the properties including not only formability (elongation performance of the film), but also solvent resistance, scratch resistance, and blocking resistance. From this viewpoint, it has been urgently necessary to provide a curable resin composition that can be used suitably for forming a film satisfying these properties in a balanced manner.

The present invention has been made in view of the above-described circumstances, and an object of the present invention is to provide a curable resin composition that enables the formation of a cured coating excellent in elongation characteristics and excellent in all of the solvent resistance, scratch resistance, and blocking resistance. Moreover, another object is to provide a film and article obtained by using the curable resin composition of the present invention.

### Solution to Problem

To achieve the above-described objects, the present inventors have made intensive studies, and consequently have found that the above-described objects can be achieved by using a specific urethane (meth)acrylate and a specific acrylamide derivative, thus completing the present invention.

Specifically, the present invention includes, for example, subject matters described in the following clauses.

### Clause 1

A curable resin composition, comprising:
a urethane (meth)acrylate (X), and
an acrylamide derivative (Y), wherein
the urethane (meth)acrylate (X) comprises, at least:
   a structural unit derived from an isocyanate;
   a structural unit derived from a polyether polyol that is trifunctional and that has a number average molecular weight of 1200 or lower; and
   a structural unit derived from a (meth)acrylic ester having at least one hydroxy group,
the acrylamide derivative (Y) is a compound that has a molecular weight of 300 or lower and that contains at least one oxygen atom in addition to an oxygen atom in an acryloyl group, and
the mass ratio X/Y between the urethane (meth)acrylate (X) and the acrylamide derivative (Y) is 1/10 to 7.5/10.

### Clause 2

The curable resin composition according to clause 1, wherein the acrylamide derivative (Y) has a cyclic moiety in a molecule.

### Clause 3

The curable resin composition according to clause 2, wherein the cyclic moiety has an oxygen atom.

### Clause 4

The curable resin composition according to any one of clauses 1 to 3, wherein the isocyanate is at least one selected from the group consisting of aromatic isocyanates and alicyclic isocyanates.

### Clause 5

A cured coating, comprising a cured product of the curable resin composition according to any one of clauses 1 to 4.

### Clause 6

A film, comprising the cured coating according to clause 5.

### Clause 7

An article, comprising the film according to clause 6.

### Advantageous Effects of Invention

The curable resin composition of the present invention enables the formation of a cured coating excellent in elongation characteristics and excellent in all of the solvent resistance, scratch resistance, and blocking resistance.

### Description of Embodiments

Hereinafter, embodiments of the present invention will be described in detail. Note that, as used herein, the expressions "contain" and "comprise" encompass the concepts "contain", "comprise", "substantially consist of", and "consisting of".

A curable resin composition of the present invention comprises a urethane (meth)acrylate (X) and an acrylamide derivative (Y). The urethane (meth)acrylate (X) comprises, at least, a structural unit derived from an isocyanate, a structural unit derived from a polyether polyol that is trifunctional and that has a number average molecular weight of 1200 or lower, and a structural unit derived from a (meth)acrylic ester having at least one hydroxy group. The acrylamide derivative (Y) is a compound that has a molecular weight of 300 or lower and that contains at least one oxygen atom in addition to an oxygen atom in an acryloyl group. Moreover, in the curable resin composition of the present invention, the mass ratio X/Y between the urethane (meth)acrylate (X) and the acrylamide derivative (Y) is 1/10 to 7.5/10.

Note that, as used herein, "(meth)acrylic" means "acrylic" or "methacrylic", "(meth)acrylate" means "acrylate" or "methacrylate", and "(meth)allyl" means "allyl" or "methallyl".

The curable resin composition of the present invention enables the formation of a cured coating excellent in elongation characteristics and excellent in all of the solvent resistance, scratch resistance, and blocking resistance. Such a cured coating can be formed on various films, which enables improvement in elongation characteristics (formability), solvent resistance, scratch resistance, and blocking resistance of the films themselves. Accordingly, the curable resin composition of the present invention can be used suitably for, for example, coating agents for films and the like.

### <Urethane (Meth)acrylate (X)>

As described above, the urethane (meth)acrylate (X) contained in the curable resin composition of the present invention comprises, at least, a structural unit derived from an isocyanate, a structural unit derived from a polyether polyol that is trifunctional and that has a number average molecular weight of 1200 or lower, and a structural unit derived from a (meth)acrylic ester having at least one hydroxy group. In other words, the urethane (meth)acrylate (X) is a compound or polymer obtained by reacting materials including an isocyanate, a polyether polyol that is trifunctional and that has a number average molecular weight of 1200 or lower, and a (meth)acrylic ester having at least one hydroxy group.

### (Isocyanate)

The type of isocyanate for forming the structural unit derived from an isocyanate is not particularly limited, and examples thereof include a wide range of known polyisocyanates having two or more isocyanate groups.

Examples of the isocyanate include isocyanate compounds such as aliphatic isocyanates, alicyclic diisocyanates, aromatic isocyanates, and araliphatic isocyanates.

Of these examples, the isocyanate is preferably at least one selected from the group consisting of aromatic isocyanates and alicyclic isocyanates. In this case, a cured coating obtained from the curable resin composition of the present invention tends to be improved in all of the elongation characteristics, solvent resistance, scratch resistance, and blocking resistance.

Examples of the aromatic polyisocyanates include 2,4-tolylene diisocyanate, 2,6-tolylene diisocyanate, 2,2'-diphenylmethane diisocyanate, 2,4'-diphenylmethane diisocyanate, 4,4'-diphenylmethane diisocyanate, polymethylene polyphenyl polyisocyanate, 4,4'-dibenzyl diisocyanate, 1,5-naphthylene diisocyanate, xylylene diisocyanate, 1,3-phenylene diisocyanate, 1,4-phenylene diisocyanate, and the like.

Examples of the alicyclic polyisocyanates include isophorone diisocyanate (hereinafter, which can be denoted by "IPDI"), hydrogenated xylylene diisocyanate, 4,4'-dicyclohexylmethane diisocyanate (hereinafter, which can be denoted by "H12MDI"), 1,4-cyclohexane diisocyanate, methylcyclohexylene diisocyanate, 1,3-bis(isocyanatomethyl)cyclohexane, and the like.

The alicyclic polyisocyanates preferably have two or more alicyclic ring structures, and further preferably have two alicyclic ring structures, as in the case of the above-described H12MDI or the like. In these cases, a cured coating excellent in solvent resistance and blocking resistance can be formed easily.

Examples of the aliphatic polyisocyanates include tetramethylene diisocyanate, dodecamethylene diisocyanate, hexamethylene diisocyanate, pentamethylene diisocyanate, 2,2,4-trimethylhexamethylene diisocyanate, 2,4,4-trimethylhexamethylene diisocyanate, lysine diisocyanate, 2-methylpentane-1,5-diisocyanate, 3-methylpentane-1,5-diisocyanate, and the like.

Examples of the araliphatic polyisocyanates include dialkyldiphenylmethane diisocyanates, tetraalkyldiphenylmethane diisocyanates, α,α,α,α-tetramethylxylylene diisocyanate, and the like.

Moreover, the isocyanates may be modified forms of organic polyisocyanates. The modified forms of organic polyisocyanates are not particularly limited, and examples thereof include carbodiimide forms, allophanate forms, biuret forms, isocyanurate forms, adducts, and the like.

The isocyanate is preferably a diisocyanate compound having two isocyanate groups, and more preferably at least one selected from the group consisting of aromatic isocyanates having two isocyanate groups and alicyclic isocyanates having two isocyanate groups. Of these examples, the isocyanate is further preferably at least one selected from the group consisting of 2,4-tolylene diisocyanate, 2,6-tolylene diisocyanate, 4,4'-dicyclohexylmethane diisocyanate (H12MDI), and isophorone diisocyanate (IPDI), and particularly preferably at least one selected from the group consisting of 2,4-tolylene diisocyanate, 2,6-tolylene diisocyanate, and 4,4'-dicyclohexylmethane diisocyanate (H12MDI).

The urethane (meth)acrylate (X) may contain one or two or more structural units derived from isocyanates.

The number average molecular weight of the isocyanate may be, for example, 100 or higher and 400 or lower, and is more preferably 120 or higher and 300 or lower, and further preferably 150 or higher and 280 or lower.

The isocyanate for forming the structural unit derived from isocyanate can be obtained by a known production method, or can also be obtained from commercially available products.

### (Polyether Polyol)

The type of polyether polyol for forming the structural unit derived from a polyether polyol that is trifunctional and that has a number average molecular weight of 1200 or lower is not particularly limited, as long as the polyether polyol is trifunctional and has a number average molecular weight of 1200 or lower. The "trifunctional polyether polyol" herein means, for example, that the polyether polyol has three functional groups that are reactive with an isocyanate, and the polyether polyol may especially be a polyether polyol having three hydroxy groups.

Examples of the polyether polyols include compounds obtained by subjecting a compound having three hydroxy groups to addition polymerization with an alkylene oxide.

The compound having three hydroxy groups may be any of various polyols or polyphenols, and examples thereof include trimethylolpropane, glycerol, and the like. The alkylene oxide may be ethylene oxide, propylene oxide, butylene oxide, or the like.

The number average molecular weight of the polyether polyol is preferably 250 or higher, more preferably 300 or higher, further preferably 350 or higher, and particularly preferably 400 or higher, and also is preferably 1100 or lower, more preferably 1050 or lower, and further preferably 1000 or lower. The "number average molecular weight of the polyether polyol" herein refers to the molecular weight calculated from the hydroxyl value and the number of functional groups.

The urethane (meth)acrylate (X) may contain one or two or more structural units derived from polyether polyols.

The polyether polyol can be obtained by a known production method, or can also be obtained from commercially available products or the like. Examples of commercially available products of polyether polyol include "EXCENOL" and "PREMINOL" of Asahi Glass Co., Ltd., "DK POLYOL" and "HIFLEX" of DKS Co. Ltd., "SANNIX" of Sanyo Chemical Industries, Ltd., "ADEKA POLYETHER" of ADEKA CORPORATION, and the like.

### ((Meth)acrylic Ester)

The type of (meth)acrylic ester for forming the structural unit derived from a (meth)acrylic ester having at least one hydroxy group is not particularly limited, as long as the (meth)acrylic ester has at least one hydroxy group. Example thereof include a wide range of known (meth)acrylic esters having at least one hydroxy group.

The number of hydroxy groups in the known (meth)acrylic esters having at least one hydroxy group is not particularly limited, and can be, for example, 5 or less, and is preferably 4 or less, more preferably 3 or less, further preferably 2 or less, and particularly preferably 1.

The (meth)acrylic ester having at least one hydroxy group may be a hydroxyalkyl (meth)acrylate. In this case, the number of carbon atoms of the alkyl chain in the hydroxyalkyl group is not particularly limited, and is preferably 2 to 6, more preferably 2 to 5, and further preferably 2 to 4.

Specific examples of the (meth)acrylic ester having at least one hydroxy group include 2-hydroxyethyl (meth)acrylate, 2-hydroxypropyl (meth)acrylate, ethylene glycol mono(meth)acrylate, propylene glycol mono (meth) acrylate, 2-hydroxy-3-methoxypropyl (meth)acrylate, pentaerythritol tri(meth)acrylate, and the like.

### (Urethane (Meth)acrylate (X))

The urethane (meth)acrylate (X) may be one consisting of the above-described structural unit derived from an isocyanate, the above-described structural unit derived from a polyether polyol that is trifunctional and that has a number average molecular weight of 1200 or lower, and the above-described structural unit derived from a (meth)acrylic ester having at least one hydroxy group. Alternatively, an additional structural unit may be contained, as long as an effect of the present invention is not impaired. When the additional structural unit is contained in the urethane (meth)acrylate (X), the content ratio thereof is, for example, 40% by mass or lower, preferably 20% by mass or lower, and further preferably 10% by mass or lower, relative to the urethane (meth)acrylate (X).

The content ratio of the structural unit derived from an isocyanate in the urethane (meth)acrylate (X) is not particularly limited. From the viewpoint that a cured coating obtained from the curable resin composition of the present invention tends to be improved in terms of the elongation characteristics, solvent resistance, scratch resistance, and blocking resistance, the content ratio of the structural unit derived from an isocyanate is preferably 20% by mass or higher, more preferably 25% by mass or higher, and further preferably 30% by mass or higher, and also is preferably 60% by mass or lower, more preferably 55% by mass or lower, and further preferably 50% by mass or lower, relative to the total amount of the urethane (meth)acrylate (X) .

The content ratio of the structural unit derived from a polyether polyol that is trifunctional and that has a number average molecular weight of 1200 or lower in the urethane (meth)acrylate (X) is not particularly limited. From the viewpoint that a cured coating obtained from the curable resin composition of the present invention tends to be improved in terms of the elongation characteristics, solvent resistance, scratch resistance, and blocking resistance, the content ratio of the structural unit derived from a polyether polyol is preferably 5% by mass or higher, more preferably 10% by mass or higher, and further preferably 15% by mass or higher, and also is preferably 60% by mass or lower, more preferably 55% by mass or lower, and further preferably 50% by mass or lower, relative to the total amount of the urethane (meth)acrylate (X).

In the urethane (meth)acrylate (X), the content ratio of the structural unit derived from a (meth)acrylic ester having at least one hydroxy group is not particularly limited. From the viewpoint that a cured coating obtained from the curable resin composition of the present invention tends to be improved in terms of the elongation characteristics, solvent resistance, scratch resistance, and blocking resistance, the content ratio of the structural unit derived from a (meth)acrylic ester is preferably 15% by mass or higher, more preferably 20% by mass or higher, and further preferably 25% by mass or higher, and also is preferably 60% by mass or lower, more preferably 55% by mass or lower, and further preferably 50% by mass or lower, relative to the total amount of the urethane (meth)acrylate (X) .

The number average molecular weight of the urethane (meth)acrylate (X) is not particularly limited. From the viewpoint that a cured coating obtained from the curable resin composition of the present invention tends to be improved in terms of the elongation characteristics, solvent resistance, scratch resistance, and blocking resistance, the number average molecular weight of the urethane (meth)acrylate (X) can be in the range of 1000 to 20000.

The number average molecular weight of the urethane (meth)acrylate (X) can be determined as a value in terms of polystyrene on a GPC instrument using tetrahydrofuran (THF) as a solvent. Specific measurement conditions are as follows.
Columns: polystyrene gel columns manufactured by Tosoh Corporation (TSKgel G4000HXL + TSKgel G3000HXL + TSKgel G2000HXL + two TSKgel G1000HXL columns are connected in series in this order)
Column Temperature: 40°C
Detector: differential refractive index detector (RID-6A manufactured by Shimadzu Corporation)
Flow rate: 1 ml/minute

The curable resin composition of the present invention can comprise one or two or more urethane (meth)acrylates (X).

The method for producing the urethane (meth)acrylate (X) is not particularly limited, and, for example, a wide variety of known methods for producing a urethane (meth)acrylate compound can be used. Specifically, a urethane prepolymer solution is prepared by reacting an isocyanate with a polyether polyol that is trifunctional and that has a number average molecular weight of 1200 or lower in a solvent. Subsequently, the obtained urethane prepolymer solution is reacted with a (meth)acrylic ester having at least one hydroxy group. Thus, a urethane (meth)acrylate (X) can be obtained.

In the method for producing a urethane (meth)acrylate (X), the ratio of use of the isocyanate, the polyether polyol, and the (meth)acrylic ester having one hydroxy group is not particularly limited, and can be determined, as appropriate, according to the intended ratio of the structural units in the urethane (meth)acrylate (X). Note that the content ratio of each structural unit in the urethane (meth)acrylate (X) can be regarded as being equal to the ratio of use of the material (monomer) corresponding to the structural unit.

The method for preparing the above-described urethane prepolymer solution is not particularly limited, and, for example, the urethane prepolymer solution can be obtained by mixing the isocyanate and the polyether polyol at 50 to 100°C in a solvent. The type of solvent is not particularly limited, and it is possible to use various organic solvents which can be used to prepare a urethane prepolymer solution, such as ketone solvents, ester solvents, and ether solvents. For example, the solvent may be methyl ethyl ketone or the like.

The free isocyanate content of the obtained urethane prepolymer solution is not particularly limited, either, and, for example, can be 30% by mass or lower, and preferably 20% by mass or lower in terms of solid content.

The method for reacting the urethane prepolymer solution with the (meth)acrylic ester having at least one hydroxy group is not particularly limited, either. For example, the urethane prepolymer solution and the (meth)acrylic ester having at least one hydroxy group can be reacted with each other by mixing them at 60 to 80°C. In this reaction, it is also possible to add a polymerization inhibitor such as hydroquinone monomethyl ether, a tin-based catalyst such as a dibutyltin dilaurate, and the like, if necessary.

In the solution of the urethane (meth)acrylate (X) obtained by the reaction between the urethane prepolymer solution and the (meth)acrylic ester having at least one hydroxy group, the remaining isocyanate is preferably 0.1% by mass or less.

### <Acrylamide Derivative (Y)>

The acrylamide derivative (Y) contained in the curable resin composition of the present invention is a compound that has a molecular weight of 300 or lower and that contains at least one oxygen atom in addition to an oxygen atom in an acryloyl group. The acrylamide derivative (Y) means that the compound has a substituent other than a hydrogen on the nitrogen atom of acrylamide or methacrylamide. Accordingly, the acrylamide derivative (Y) may be a derivative of acrylamide or a derivative of methacrylamide.

The type of acrylamide derivative (Y) is not particularly limited, as long as the acrylamide derivative (Y) is a compound that has a molecular weight of 300 or lower and that contains at least one oxygen atom in addition to an oxygen atom in an acryloyl group.

The acrylamide derivative (Y) has a molecular weight of preferably 250 or lower and more preferably 200 or lower, and also preferably 100 or higher. The molecular weight of the acrylamide derivative (Y) is based on the molar mass.

In the acrylamide derivative (Y), the at least one oxygen atom in addition to an oxygen atom in an acryloyl group may be one based on an ether linkage, a hydroxy group, a carboxy group, a carbonyl group, or the like. The at least one oxygen atom is preferably based on an ether linkage or a hydroxy group, and more preferably based on an ether linkage.

In the acrylamide derivative (Y), the number of oxygen atoms in addition to an oxygen atom in an acryloyl group is preferably 4 or less, more preferably 3 or less, further preferably 2 or less, and particularly preferably 1.

The acrylamide derivative (Y) is preferably such that a substituent attached to a nitrogen atom in the molecule is a substituent having an oxygen atom. In this case, the substituent may be a group having an ether linkage, an alkyl group having a hydroxy group, or the like, and any of these groups can have 10 or less carbon atoms, and has preferably 8 or less, more preferably 6 or less, and further preferably 5 or less carbon atoms.

A specific example of the acrylamide derivative (Y) may be acryloylmorpholine or may also be a (meth)acrylamide having a hydroxyalkyl group on a nitrogen atom. Examples of the hydroxyalkyl group in the (meth)acrylamide having a hydroxyalkyl group on a nitrogen atom include a hydroxymethyl group, a hydroxyethyl group, a hydroxypropyl group, a hydroxybutyl group, and the like. In the (meth)acrylamide having a hydroxyalkyl group on a nitrogen atom, two hydroxyalkyl groups may be attached to the nitrogen atom, or one hydroxyalkyl group may be attached to the nitrogen atom. When the number of hydroxyalkyl groups in the (meth)acrylamide having a hydroxyalkyl group on a nitrogen atom is one, a hydrogen and a hydroxyalkyl group are attached to the nitrogen atom, for example. When two hydroxyalkyl groups are attached to the nitrogen atom, the hydroxyalkyl groups may be the same or different from each other.

It is preferable that the acrylamide derivative (Y) have a cyclic moiety in a molecule, and, in this case, it is further preferable that the cyclic moiety have an oxygen atom. With this, a cured coating obtained from the curable resin composition of the present invention tends to be improved in terms of the elongation characteristics, solvent resistance, scratch resistance, and blocking resistance, especially.

In the acrylamide derivative (Y) comprising a cyclic moiety having an oxygen atom, it is preferable that the cyclic moiety be formed to include the nitrogen atom of the acrylamide derivative (Y), and an ether linkage be contained in the cyclic moiety. The number of carbon atoms of such a cyclic moiety is, for example, 2 to 10, and preferably 3 to 8. Specifically, the acrylamide derivative (Y) comprising a cyclic moiety having an oxygen atom may be the above-described acryloylmorpholine. It is particularly preferable that the acrylamide derivative (Y) contain acryloylmorpholine.

The curable resin composition of the present invention can comprise one or two or more acrylamide derivatives (Y).

### <Curable Resin Composition>

The curable resin composition of the present invention comprises a urethane (meth)acrylate (X) and an acrylamide derivative (Y), and, in particular, the mass ratio X/Y between the urethane (meth)acrylate (X) and the acrylamide derivative (Y) is 1/10 to 7.5/10. In the mass ratio X/Y, X means the mass of the urethane (meth)acrylate (X) contained in the curable resin composition, and Y means the mass of the acrylamide derivative (Y) contained in the curable resin composition.

When the mass ratio X/Y is 1/10 to 7.5/10 (in other words, 1/10 or higher and 7.5/10 or lower), a cured coating obtained from the curable resin composition of the present invention tends to be improved in terms of the elongation characteristics, solvent resistance, scratch resistance, and blocking resistance, especially. When the mass ratio X/Y is lower than 1/10, the elongation characteristics, solvent resistance, scratch resistance, and blocking resistance cannot be kept in a balanced manner, and particularly the solvent resistance and the blocking resistance are lowered. Meanwhile, when the mass ratio X/Y exceeds 7.5/10, the elongation characteristics, solvent resistance, scratch resistance, and blocking resistance cannot be kept in a balanced manner, and particularly the elongation characteristics deteriorate, causing decrease in formability.

The mass ratio X/Y is preferably 1/9 or higher, more preferably 1/8 or higher, and further preferably 1/7 or higher, and also is preferably 7/10 or lower, more preferably 6/10 or lower, further preferably 5/10 or lower, still further preferably 4/10 or lower, and particularly preferably 3/10 or lower.

The curable resin composition of the present invention can comprise additional components in addition to the urethane (meth)acrylate (X) and the acrylamide derivative (Y) .

The additional components contained in the curable resin composition of the present invention include a solvent, a polymerization initiator, a monomer, a light stabilizer, an ultraviolet absorber, a catalyst, a leveling agent, a defoamer, a polymerization promoter, an antioxidant, a flame retardant, an infrared absorber, an antistat, a slipping agent, a plasticizer, a dispersant, and the like.

The solvent contained in the curable resin composition of the present invention is not particularly limited, and it is possible to use a wide variety of known organic solvents which can be used to impart coatability. Examples of the solvent include chlorine-containing hydrocarbons such as chloroform and 1,2-dichloroethane; ether compounds such as diethyl ether and tetrahydrofuran; aliphatic hydrocarbons such as hexane and heptane; alicyclic hydrocarbons such as cyclohexane; aromatic hydrocarbons such as benzene, toluene, and xylene; ketone compounds such as acetone and methyl ethyl ketone; ester compounds such as vinyl acetate; alcohols such as methanol, ethanol, isopropyl alcohol, and t-butanol; formamides such as N,N-dimethylformamide and N,N-dimethylacetamide; pyrrolidones such as 2-pyrrolidone and N-methylpyrrolidone; dimethyl sulfoxide; and the like.

The amount of solvent contained in the curable resin composition of the present invention is not particularly limited, and can be determined, as appropriate, depending on the type of the intended coating. For example, the amount of the solvent can be adjusted so that the total concentration of the urethane (meth)acrylate (X) and the acrylamide derivative (Y) in the curable resin composition of the present invention can be 1 to 100% by mass.

The type of polymerization initiator contained in the curable resin composition of the present invention is not particularly limited, and, for example, a wide variety of known polymerization initiators can be used. The polymerization initiator may be either a pyrolytic polymerization initiator or a photopolymerization initiator, and the polymerization initiator is preferably a photopolymerization initiator in terms of ease of film formation.

Examples of the photopolymerization initiator include aromatic ketones such as benzophenone, aromatic compounds such as anthracene and α-chloromethylnaphthalene, and sulfur compounds such as diphenyl sulfide and thiocarbamates. Examples of polymerization initiator based on active energy rays other than visible light, such as ultraviolet rays, include acetophenone, acetophenone benzyl ketal, 1-hydroxycyclohexyl phenyl ketone, 2,2-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2-benzyl-2-dimethylamino-1-(4-morpholinophenyl)-butanone-1,4-(2-hydroxyethoxy) phenyl-(2-hydroxy-2-propyl) ketone, 2,4,6,-trimethylbenzoyl diphenyl phosphine oxide, bis-(2,6-dimethoxybenzoyl)-2,4,4-trimethylpentylphosphine oxide, oligo(2-hydroxy-2-methyl-1-(4-(1-methylvinyl)phenyl)propanone), and the like.

The amount of the polymerization initiator contained in the curable resin composition of the present invention is not particularly limited, and can be 1 to 10 parts by mass relative to 100 parts by mass of the total amount of the urethane (meth)acrylate (X) and the acrylamide derivative (Y) .

The use of the curable resin composition of the present invention enables the formation of a cured coating; for example, curing the curable resin composition of the present invention by a suitable method enables the formation of a cured coating.

One mode of forming the cured coating may be a method in which a curable resin composition of the present invention containing a polymerization initiator and a solvent is applied onto a base material to form a coat, and such a coating is cured to form a cured coating.

The base material is not particularly limited, and examples thereof include various films. The types of the films are not particularly limited, either, and the films may be a wide range of various resin films, including, for example, polyethylene terephthalate films, polyethylene films, acrylic films, and the like.

The method for applying the curable resin composition onto the base material is not particularly limited, either, and a wide range of known application methods can be used. For example, the curable resin composition can be applied by using a known coating apparatus, such as a blade coater, an air knife coater, a roll coater, a bar coater, a gravure coater, a micro gravure coater, a rod blade coater, a lip coater, a die coater, a curtain coater, or the like.

The method for curing the coat formed on a base material is not particularly limited, either, and, for example, may be a method in which the coat is irradiated with active energy rays. The active energy rays are preferably ultraviolet rays, and other examples include electron beams, gamma rays, a carbon arc lamp, a xenon lamp, a metal halide lamp, and the like. The method and conditions for the irradiation with active energy rays are not limited, either, and may be the same as known ones.

The above-described curing causes a reaction, for example, a polymerization reaction to proceed between the urethane (meth)acrylate (X) and the acrylamide derivative (Y) in the coat, which promotes curing of the coating, resulting in the formation of a cured coating.

The thickness of the cured coating of the curable resin composition of the present invention is not particularly limited, either, and can be set within an appropriate range depending on the intended application.

The cured coating obtained by curing the curable resin composition of the present invention is excellent in elongation characteristics, solvent resistance, scratch resistance, and blocking resistance, and, when allied to various base materials, can impart these properties to the base materials. The cured coating obtained by curing the curable resin composition of the present invention can be formed on various base materials, and, for example, can be applied to films, preferably.

A film on which the cured coating obtained by curing the curable resin composition of the present invention is formed has an excellent formability, and also is excellent in solvent resistance and scratch resistance. Moreover, the film is excellent in blocking resistance. Hence, for example, when the film is formed into a rolled article such as a roll, blocking between portions of the film is suppressed easily. Accordingly, the film can be applied to various articles.

Examples of the articles include plated steel sheets such as zinc-plated steel sheets and aluminum-zinc alloy steel sheets, and metal base materials such as aluminum sheets, aluminum alloy sheets, electrical steel sheets, copper sheets, and stainless-steel sheets which are used for automobiles, electric home appliances, mobile phones, office automation equipment, parts of automobiles, and the like, etc.

To identify the invention encompassed by the present disclosure, the components (properties, structures, functions, and the like) described in the embodiments of the present disclosure may be employed in any combination. In other words, the present disclosure encompasses all subject matters made up of any and every combination of the components that are described in the present DESCRIPTION and that can be combined.

### EXAMPLES

Hereinafter, the present invention is described more specifically based on Examples; however, the present invention is not limited to these modes of Examples.

### (Materials)

Suitable materials were selected from the materials shown below, and curable resin compositions were prepared.

### <Isocyanates>

·Isocyanate 1: a mixture of 2,4-tolylene diisocyanate and 2,6-tolylene diisocyanate (TDI, "COSMONATE T-80" of Mitsui Chemicals, Inc.)
·Isocyanate 2: 4,4'-dicyclohexylmethane diisocyanate (H12MDI, "VESTANAT H12MDI" of Evonik Industries AG)
·Isocyanate 3: isophorone diisocyanate (IPDI, "VESTANAT IPDI" of Evonik Industries AG)

### <Polyether Polyols>

·Polyether polyol 1: "EXCENOL 430" of Asahi Glass Co., Ltd. (which is trifunctional and has a number average molecular weight of 420)
·Polyether polyol 2: "EXCENOL 1030" of Asahi Glass Co., Ltd. (which is trifunctional and has a number average molecular weight of 1000)
·Polyether polyol 3: "EXCENOL 1030" of Asahi Glass Co., Ltd. (which is bifunctional and has a number average molecular weight of 400)
·Polyether polyol 4: "EXCENOL 450ED" of Asahi Glass Co., Ltd. (which is tetrafunctional and has a number average molecular weight of 500)
·Polyether polyol 5: "EXCENOL 903" of Asahi Glass Co., Ltd. (which is trifunctional and has a number average molecular weight of 1500)

### <(Meth)acrylic Esters Having Hydroxy Group>

·(Meth)acrylic ester 1: hydroxyethyl methacrylate (HEMA)
·(Meth)acrylic ester 2: hydroxyethyl acrylate (HEA)

### <Acrylamide Derivatives>

·Acrylamide derivative 1: acryloylmorpholine ("ACMO" (registered trademark) of KJ Chemicals Corporation)
·Acrylamide derivative 2: hydroxyethylacrylamide
·Acrylamide derivative 3: N,N-diethylacrylamide
·Acrylamide derivative 4: N,N-dimethylacrylamide

### (Example 1)

The materials shown in Example 1 of the formulation table in Table 1 were selected, and a curable resin composition was prepared. Specifically, 29.2 parts by mass of polyether polyol 1 and 38.3 parts by mass of isocyanate 1 were added into 50 parts by mass of methyl ethyl ketone, and the reaction was allowed to proceed at 70 to 75°C for 60 minutes. This reaction gave a urethane prepolymer solution having a free isocyanate group content (in terms of solid content) of 14.4% by mass. To the obtained urethane prepolymer solution, 32.5 parts by mass of (meth)acrylic ester 1 was added, and then the reaction was allowed to proceed at 70 to 75°C, until the free isocyanate group content (in terms of solid content) reached a value lower than 0.1% by mass, to obtain a solution of a urethane (meth)acrylate (X) having a number average molecular weight (Mn) of 2500. To the solution of the urethane (meth)acrylate (X), acrylamide derivative 1 was added at a mass ratio X/Y of 1/6. Thus, a curable resin composition was obtained. Note that, in the mass ratio X/Y, X is the mass of the urethane (meth)acrylate, which means the total mass of the isocyanate, the polyether polyol, and the (meth)acrylic ester having a hydroxy group used for the production, and Y means the mass of the acrylamide derivative.

### (Examples 2 to 19)

Curable resin compositions comprising a urethane (meth)acrylate and an acrylamide derivative were obtained by the same method as in Example 1, except that a urethane prepolymer solution was produced by selecting the materials shown in each of Examples 2 to 19 in the formulation table in Table 1, and that the ratio X/Y was changed as in the formulation table in Table 1.

### (Comparative Examples 1 to 7)

Curable resin compositions comprising a urethane (meth)acrylate and an acrylamide derivative were obtained by the same method as in Example 1, except that a urethane prepolymer solution was produced by selecting the materials shown in each of Comparative Examples 1 to 7 in the formulation table in Table 2, and that the ratio X/Y was changed as in the formulation table in Table 2.

### (Evaluation Methods)

The solvent resistance, elongation characteristics, scratch resistance, and blocking resistance of cured coatings formed by using the curable resin compositions obtained in Examples and Comparative Examples were evaluated by the following procedures.

### <Solvent Resistance>

A coat was formed by adding 3 parts by mass of a polymerization initiator (Irgacure 184) per 100 parts by mass of the total amount of the urethane (meth)acrylate and the acrylamide derivative in a curable resin composition, uniformly mixing the mixture, and then applying the mixture onto a polyethylene terephthalate base material (PET manufactured by Toray Industries, Inc., model number: #100 T60) to have a film thickness of approximately 20 µm. The coat was irradiated with ultraviolet rays to form a cured coating. The conditions for the ultraviolet irradiation were as follows. Under a nitrogen atmosphere (oxygen concentration: 0.3%), the lamp was a high-pressure mercury lamp of 80 W/cm, the cumulative illuminance was 250 mJ/cm², the line speed was 5 m/min, and the electric power was 2 kW. A rubbing test was conducted 10 times on the surface of the obtained cured coating by using felt impregnated with a mixture solvent of ethyl acetate and toluene (mass ratio: 1:1) under a 500-g load. After that, the state of the cured coating was visually observed, to evaluate the solvent resistance based on the following evaluation criteria.

### [Evaluation Criteria]

∘: The solvent resistance was extremely good, with no change observed on the surface of the cured coating.
Δ: The solvent resistance was good, with only some erosion observed on the surface of the cured coating.
×: The solvent resistance was poor, with the cured coating peeling off.

### <Elongation Characteristics>

A coat was formed by adding 3 parts by mass of a polymerization initiator (Irgacure 184) per 100 parts by mass of the total amount of the urethane (meth)acrylate and the acrylamide derivative in a curable resin composition, uniformly mixing the mixture, and then applying the mixture onto release paper to have a film thickness of approximately 100 µm. The coat was irradiated with ultraviolet rays to form a cured coating. The conditions for the ultraviolet irradiation were as follows. Under a nitrogen atmosphere (oxygen concentration: 0.3%), the lamp was a high-pressure mercury lamp of 80 W/cm, the cumulative illuminance was 600 mJ/cm², the line speed was 5 m/min, and the electric power was 2 kW. A test piece prepared by cutting the obtained cured coating into an elongated rectangular shape having a width of 1 cm and a length of 5 cm was allowed to stand in an atmosphere of 150°C for 30 minutes or more, and then subjected to measurement of the elongation (%) by conducting a tensile test at a rate of 50 mm/min in accordance with JIS-C-2151, to evaluate the elongation characteristics based on the following evaluation criteria.

### [Evaluation Criteria]

∘: The elongation characteristics were extremely good, with an elongation of 70% or higher.
Δ: The elongation characteristics were good, with an elongation of 30% or higher and lower than 70%.
×: The elongation characteristics were poor, with an elongation lower than 30%.

### <Scratch Resistance>

A coat was formed by adding 3 parts by mass of a polymerization initiator (Irgacure 184) per 100 parts by mass of the total amount of the urethane (meth)acrylate and the acrylamide derivative in a curable resin composition, uniformly mixing the mixture, and then applying the mixture onto a polyethylene terephthalate base material (PET manufactured by Toray Industries, Inc., model number: #100 T60) to have a film thickness of approximately 20 µm. The coat was irradiated with ultraviolet rays to form a cured coating. The conditions for the ultraviolet irradiation were as follows. Under a nitrogen atmosphere (oxygen concentration: 0.3%), the lamp was a high-pressure mercury lamp of 80 W/cm, the cumulative illuminance was 250 mJ/cm², the line speed was 5 m/min, and the electric power was 2 kW. On the surface of the obtained cured coating, a brass wire brush (manufactured by Fujiwara Industrial Co., Ltd., No. 9) was reciprocally slid five times in total in an environment of 23°C under a 500-g load, and the state of scratches made on the cured film was visually observed, to evaluate the scratch resistance based on the following evaluation criteria.

### [Evaluation Criteria]

∘: The scratch resistance was extremely good, with scratches healing within 10 seconds.
Δ: The scratch resistance was good, with scratches healing after 10 seconds had passed but within 10 minutes.
×: The scratch resistance was poor, with scratches not healing even after 1 hour had passed.

### <Blocking Resistance>

A coat was formed by adding 3 parts by mass of a polymerization initiator (Irgacure 184) per 100 parts by mass of the total amount of the urethane (meth)acrylate and the acrylamide derivative in the curable resin composition, uniformly mixing the mixture, and then applying the mixture onto a polyethylene terephthalate base material (PET manufactured by Toray Industries, Inc., model number: #100 T60) to have a film thickness of approximately 20 µm. The coat was irradiated with ultraviolet rays to form a cured coating A. The conditions for the ultraviolet irradiation were as follows. Under a nitrogen atmosphere (oxygen concentration: 0.3%), the lamp was a high-pressure mercury lamp of 80 W/cm, the cumulative illuminance was 250 mJ/cm², the line speed was 5 m/min, and the electric power was 2 kW. In addition, a cured coating B was prepared under the same conditions as those for the preparation of the cured coating A. Subsequently, a laminate was prepared in which the cured coating A and the cured coating B had been laminated on each other under a 500-g load. The cured coating A and the cured coating B of the laminate were detached from each other. Upon the detachment, the surfaces of lamination of the cured coating A and the cured coating B were visually observed to evaluate the blocking resistance based on the following evaluation criteria.

### [Evaluation Criteria]

∘: The blocking resistance was extremely good, with the surfaces of lamination not adhering to each other.
Δ: The blocking resistance was good, with only 50% or more of the areas of the surfaces of lamination adhering to each other.
×: The blocking resistance was poor, with the entire surfaces of lamination adhering to each other.

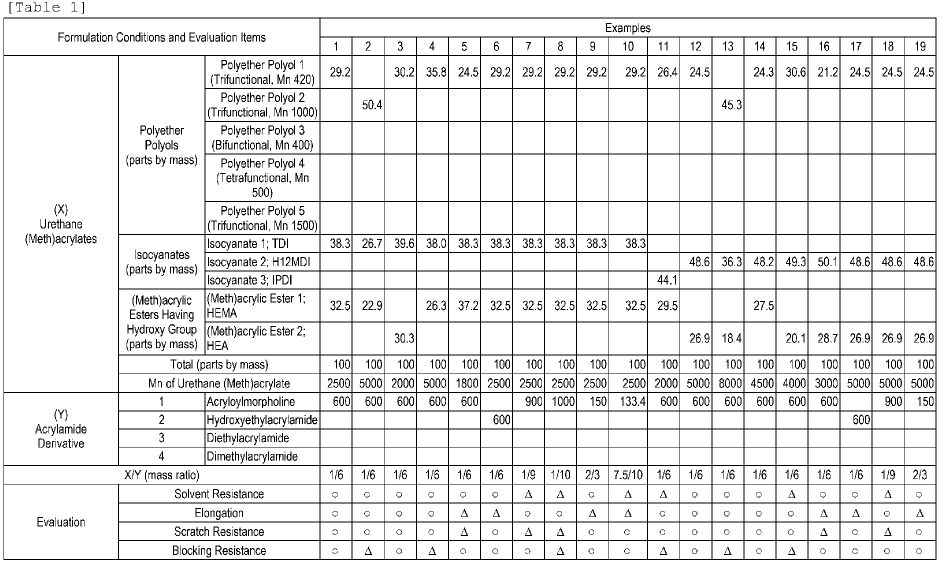

**[Table 2]**

| Formulation Conditions and Evaluation Items | | | Comparative Examples | | | | | | |
|---|---|---|---|---|---|---|---|---|---|
| | | | 1 | 2 | 3 | 4 | 5 | 6 | 7 |
| (X) Urethane (Meth)acrylates | Polyether Polyols (parts by mass) | Polyether Polyol 1 (Trifunctional, Mn 420) | | | | 29.2 | 29.2 | 29.2 | 29.2 |
| | | Polyether Polyol 2 (Trifunctional, Mn 1000) | | | | | | | |
| | | Polyether Polyol 3 (Bifunctional, Mn 400) | 36.8 | | | | | | |
| | | Polyether Polyol 4 (Tetrafunctional, Mn 500) | | 26.8 | | | | | |
| | | Polyether Polyol 5 (Trifunctional, Mn 1500) | | | 58.9 | | | | |
| | Isocyanates (parts by mass) | Isocyanate 1; TDI | 34.0 | 39.4 | 22.1 | 38.3 | 38.3 | 38.3 | 38.3 |
| | | Isocyanate 2; H12MDI | | | | | | | |
| | | Isocyanate 3; IPDI | | | | | | | |
| | (Meth)acrylic Esters Having Hydroxy Group (parts by mass) | (Meth)acrylic Ester 1; HEMA | 29.2 | 33.8 | 19.0 | 32.5 | 32.5 | 32.5 | 32.5 |
| | | (Meth)acrylic Ester 2; HEA | | | | | | | |
| | Total (parts by mass) | | 100 | 100 | 100 | 100 | 100 | 100 | 100 |
| | Mn of Urethane (Meth)acrylate | | 2000 | 3500 | 13000 | 2500 | 2500 | 2500 | 2500 |
| (Y) Acrylamide Derivative | 1 | Acryloylmorpholine | 600 | 600 | 600 | | | 120 | 1200 |
| | 2 | Hydroxyethylacrylamide | | | | | | | |
| | 3 | Diethylacrylamide | | | | 100 | | | |
| | 4 | Dimethylacrylamide | | | | | 100 | | |
| X/Y (mass ratio) | | | 1/6 | 1/6 | 1/6 | 1/6 | 1/6 | 1/1.2 | 1/12 |
| Evaluation | Solvent Resistance | | × | Δ | × | × | × | Δ | × |
| | Elongation | | ○ | × | ○ | Δ | Δ | × | O |
| | Scratch Resistance | | Δ | × | Δ | Δ | Δ | Δ | Δ |
| | Blocking Resistance | | × | ○ | × | × | × | Δ | × |

Table 1 shows the formulation conditions for the curable resin composition prepared in each Example, the number average molecular weight (Mn) of the obtained urethane (meth)acrylate, the value of the mass ratio X/Y, and the evaluation results of the cured coating obtained by using the curable resin composition. Meanwhile, Table 2 shows the formulation conditions for the curable resin composition prepared in each Comparative Example, and the evaluation results of the cured coating obtained by using the curable resin composition. Note that, in Table 1 and Table 2, each blank means that the material was not used.

From the results in Table 1 and Table 2, it has been found that the curable resin compositions obtained in Examples enable the formation of cured coatings excellent in elongation characteristics and excellent in all of the solvent resistance, scratch resistance, and blocking resistance.

## Claims

1. A curable resin composition, comprising:
a urethane (meth)acrylate (X); and
an acrylamide derivative (Y), wherein
the urethane (meth)acrylate (X) comprises at least:
a structural unit derived from an isocyanate;
a structural unit derived from a polyether polyol that is trifunctional and that has a number average molecular weight of 1200 or lower; and
a structural unit derived from a (meth)acrylic ester having at least one hydroxy group,
the acrylamide derivative (Y) is a compound that has a molecular weight of 300 or lower and that contains at least one oxygen atom in addition to an oxygen atom in an acryloyl group, and
the mass ratio X/Y between the urethane (meth)acrylate (X) and the acrylamide derivative (Y) is 1/10 to 7.5/10.

2. The curable resin composition according to claim 1, wherein
the acrylamide derivative (Y) has a cyclic moiety in a molecule.

3. The curable resin composition according to claim 2, wherein the cyclic moiety has an oxygen atom.

4. The curable resin composition according to claim 1, wherein the isocyanate is at least one selected from the group consisting of aromatic isocyanates and alicyclic isocyanates.

5. A cured coating, comprising a cured product of the curable resin composition according to any one of claims claim 1 to 4.

6. A film, comprising the cured coating according to claim 5.

7. An article, comprising the film according to claim 6.
